# EUROPEAN PATENT APPLICATION

(11) **EP 4 067 421 A1**
(43) Date of publication of application: **05.10.2022**
(21) Application number: 21213668.3
(22) Date of filing: 22.03.2021
(51) Int. Cl.: C08J 11/08, C08L 27/02, C08L 27/06

(54) **METHOD FOR TREATING HALOGENATED POLYMERS**

(62) Divisional of application: 21164018.0
(71) Applicant: Baerlocher GmbH, 85716 Unterschleissheim (DE)
(72) Inventor: Fokken, Stefan, 85244 Röhrmoos (DE); Reichwald, Frank, 80992 München (DE); Willems, Markus, 81375 München (DE)
(74) Representative: Mathys & Squire

(57) **Abstract**

The present invention relates to a process for treating halogenated polymers comprising mixing a ground halogenated polymer starting material comprising a halogenated polymer and one or more further components with a solvent to provide a composition comprising a continuous phase and a discontinuous phase; separating the continuous phase and the discontinuous phase; and evaporating the solvent from the continuous phase to provide a halogenated polymer product.

## Description

### Field of the invention

The present invention relates to a process for for treating halogenated polymers, in particular for the removal of heavy metals (e.g., Pb and Cd) from halogenated polymers (e.g., PVC), and more particularly to a process for the recycling of articles based on halogenated polymers.

### Background

The recycling of polymers, in particular halogenated polymers like vinyl chloride polymers, is part of a circular economy plan. It is desired to develop more ecologically responsible ways to produce, use and recycle halogenated polymers, in particular vinyl chloride polymers.

Most halogenated polymer articles which are desired to be recycled may have been stabilized with heavy metals and/or heavy metal compounds. In particular Pb- and Cd-containing stabilizers are comprised.

However, the future REACh regulations (Registration, Evaluation, Authorization and Restriction of Chemicals) are expected to only allow the recycling of Pb or Cd-containing polymer articles after authorization. Absent such authorization, mechanical recycling is not allowed.

In general, mechanical recycling is the more cost and energy efficient method of PVC recycling. Thus, to further allow recycling of halogenated polymer articles, the heavy metals need to be removed from the polymer.

Several methods of removing heavy metals from halogenated polymers are known in the art, all of which have drawbacks that are desired to be avoided.

For example, Solvay disclosed a plastic recycling process for PVC, the so-called "VinyLoop". It comprises the steps of dissolving plasticised PVC in an organic solvent and its precipitation by the introduction of steam. However, the introduction of steam results in a mixture of water and organic solvent that would require separation before the solvent could be re-used. Moreover, the recovered PVC still comprises plasticizers which may also lead to regulatory issues, e.g., when DOP is comprised. Also, Solvay has not disclosed means for recycling rigid PVC articles.

Thus, there is a need for a process for treating halogenated polymers that is suitable for recycling rigid PVC articles. Further, there is a need for a process for recycling halogenated polymers that is allowable under REACh regulations. Further, there is a need for a process for treating halogenated polymers that allows for separation of inorganic compounds. Further, there is a need for a process for treating halogenated polymers that offers the possibility to easily re-use the solvent. Further, there is a need for a process for treating halogenated polymers that allows for direct processing of a recycled polymer into a new polymer article.

### Summary of the invention

The present invention relates to a process for treating halogenated polymers. The process comprises
(a) mixing a ground halogenated polymer starting material with a solvent to provide
   a composition comprising a continuous phase and a discontinuous phase,
   wherein the halogenated polymer starting material comprises a halogenated polymer, and one or more further components;
   wherein the continuous phase comprises at least part of the halogenated polymer and at least part of the solvent, and wherein the continuous phase is a solution; and
   wherein the discontinuous phase comprises at least part of the one or more further components;
(b) separating the continuous phase and the discontinuous phase
(c) adding additives to the continuous phase after separation from the discontinuous phase; and
(d) evaporating the solvent from the continuous phase to provide a halogenated polymer product.

The present invention further relates to a process for making a polymer article. The process comprises
i. providing a halogenated polymer product obtained by a method according to the invention; and
ii. processing the halogenated polymer product to obtain a polymer article, wherein the halogenated polymer product is processed by
   a) mixing it with virgin halogenated polymer and one or more stabilizing components;
   b) adding stabilizing components; or
   c) adding the halogenated polymer product to a mixture of virgin halogenated polymer and optionally one or more stabilizing components during an extrusion process.

Thus, the present invention provides a method for treating halogenated polymer starting materials. The present invention is particularly useful for recycling halogenated polymer starting materials that includes the removal of compounds comprised in the starting material that are no longer desired in a new product. For example, the present invention is useful for the removal of heavy metals from the halogenated polymer starting materials, such that the heavy metal content in the halogenated polymer product is lower than the heavy metal content in the halogenated polymer starting material. The recovered halogenated polymer can be added either into a conventional dry-blending process, or directly into the extruder. Due to the addition of stabilizers prior to the evaporation of the solvent, the recovered halogenated polymer can be suitable for direct extrusion. A further advantage of the present invention is the absence or low amount of water, so that the solvent may easily be re-used without extensive work-up steps.

### Detailed description of the invention

The present invention relates to a process for treating halogenated polymers.

The term "solvent" includes a pure substance or a mixture of two or more substances.

The term "insoluble" as used herein means that no more than 1 g of a substance are dissolved in 1 L of the solvent under the mixing conditions. Thus, as used herein, an insoluble substance means the same as a substance which is insoluble in the solvent.

A "continuous phase" according to this disclosure is a solution. A "solution" according to this disclosure is a single phase, homogenous mixture of at least one solute in at least one solvent. Accordingly, the terms "dissolve" or "dissolving" mean that at least one solute and at least one solvent form a homogenous mixture.

A "discontinuous phase" according to this disclosure is a solid. The discontinuous phase may be dispersible but is not soluble in the continuous phase.

A "suspension" according to this disclosure is a continuous phase in which a discontinuous phase is dispersed.

The "absence of water" as used herein means that less than 2 wt.-% of water are comprised in a composition, preferably less than 1 wt.-% or less than 0.5 wt.-% or less than 0.1 wt.-%, more preferably less than 0.01 wt.-%.

A "rigid" polymer material according to this disclosure is an unplasticized polymer material in which no plasticizer has been added to soften it. Its rigidity may be characterized by a Young modulus between about 2.14 GPa and about 4.14 GPa. Rigid PVC (also called "PCV-U") is well known to those skilled in the technical field of polymers.

A "content" or a "percentage" specified herein and relating to an "amount" is by weight, unless otherwise specified.

Herein, the terms "halogenated polymer starting material", "polymer starting material" and "starting material" have the same meaning and are interchangeable.

The terms "elevated" and "reduced" temperature or pressure are in relation to normal conditions, i.e., 20°C and 1 bar.

The term "virgin" as used herein describes compounds that are used in the process according to the invention for the first time. For example, "virgin halogenated polymer" is a halogenated polymer that is merchant-bought or prepared outside the process according to the invention, namely it is not a halogenated polymer obtained after the evaporation step as the halogenated polymer product. Preferably the term "virgin" relates to a halogenated polymer that is freshly manufactured. i.e., a halogenated polymer that has just been obtained by polymerization of applicable monomers and processed into a marketable form as a raw material halogenated polymer. As another example, "virgin solvent" is a solvent that is store-bought or prepared outside the process, namely it is not solvent obtained in the evaporation step that is re-introduced into the process.

The term "sheet" as used herein means any thin, flexible or rigid, single-layer or multilayer articlewith a thickness of less than 50 mm.

The process for treating halogenated polymers comprises
(a) mixing a ground halogenated polymer starting material with a solvent to provide a composition comprising a continuous phase and a discontinuous phase,
   wherein the halogenated polymer starting material comprises a halogenated polymer, and one or more further components;
   wherein the continuous phase comprises at least part of the halogenated polymer and at least part of the solvent, and wherein the continuous phase is a solution; and
   wherein the discontinuous phase comprises at least part of the one or more further components;
(b) separating the continuous phase and the discontinuous phase
(c) adding additives to the continuous phase after separation from the discontinuous phase; and
(d) evaporating the solvent from the continuous phase to provide a halogenated polymer product.

### Step (a)

In a step (a), the process according to the invention includes mixing a ground halogenated polymer starting material with a solvent to provide a composition comprising a continuous phase and a discontinuous phase.

Preferred mixing techniques according to the invention are stirring, shaking, tumble mixing, batch mixing (e.g., using dynamic mixing inline or with the help of static mixers, moving mixers, gearboxes, multi-shaft mixers), continuous mixing (e.g., using a continuous processor where one or more dry substances and one or more solvents are accurately and consistently metered into the machine and a continuous, homogeneous mixture comes out of the machine), or combinations of two or more thereof. It is preferred to mix the ground halogenated polymer starting material with the solvent by stirring.

Mixing can be carried out under a pressure determined by the temperature. Generally, it is preferable to operate under elevated temperature and pressure, i.e., at a temperature and a pressure which are greater than the ambient values. The temperature can be up to 120°C, for example up to 100°C. For example, the associated pressure is at least 2 bar, or at least 4 bar. Advantageously, the pressure does not exceed 10 bar. Preferably, mixing is performed at a temperature of from 20 to 100°C. Preferably, the temperature is below the boiling point of the solvent or mixture of solvents. It is also preferred that the mixing is performed at an elevated temperature in the range of from 35 to 95°C or from 50 to 90°C or from 70 to 85°C.

The mixing can be carried out under an inert atmosphere, e.g., under nitrogen.

To provide a ground halogenated polymer starting material, the starting material is subject to grinding. Grinding can be performed by any suitable method for grinding polymers known in the art, e.g., using low-speed twin shaft grinders, high-speed knife-type grinders or low-speed grinders with a grid.

Preferably, the ground halogenated polymer starting material has a particle size in the range of from 0.3 mm to 5 cm, preferably of from 0.5 mm to 4 cm or from 0.8 mm to 3 cmor from 1 mm to 1 cm.

The halogenated polymer starting material comprises a halogenated polymer and one or more further components.

The halogenated polymer starting material comprises a halogenated polymer. The halogenated polymers can be polymers of vinyl chloride, including homopolymers (PVC), post-chlorinated polyvinyl chloride (CPVC), copolymers of vinyl chloride with ethylene-type unsaturated compounds, PVC-VA (vinyl acetate) copolymers, PVC-acrylate, polymer mixtures of polyvinyl chloride with ethyl-vinyl acetate (EVA), acrylonitrile/butadienestyrene (ABS), methacrylate-butadienestyrene (MBS), acrylonitrile butadiene (NBR), styrene-acrylonitrile (SAN), chlorinated polyethylene (CPE), polyalkylacrylate (PAA), polyalkylmethacrylate (PAMA), polyamides or polylactones. Preferably, the halogenated polymer is selected from the list consisting of homopolymers of vinyl chloride, post-chlorinated polyvinyl chloride, copolymers comprising vinyl chloride units, polymers of vinylidene chloride, and post-chlorinated polymers and copolymers of vinyl chloride, more preferably PVC and CPVC.

Preferably, the halogenated polymer starting material is rigid, that is the starting material comprises plasticizers and elastomers in an amount of from 0 to 5 phr, based on the amount of the halogenated polymer. More preferably, the halogenated polymer starting material is unplasticized, i.e., comprising no or less than 0.1 phr of plasticizer and elastomers.

The halogenated polymer starting material may be in any form, for example in the form of flexible pipes, or rigid pipes, containers, foamed and compact rigid sheets, window frames and the profiles they are based on and other technical profiles such as roller shutter profiles and the like. They may have been manufactured by any technique known in the art, e.g., by extrusion or injection moulding.

The halogenated polymer starting material comprises one or more further components. The further components can be one or more of additives for halogenated polymers that are known in the art, for example, heavy metals or heavy metal containing compounds, metal perchlorates, blowing agents, epoxy compounds, fatty acid salts, 1,3-dicarbonyl compounds, polyols, hydrotalcites, metal oxides, metal hydroxides, lubricants, antioxidants, pigments, fillers, UV absorbers, light stabilizers, impact modifiers, processing aids, antistatics, biocides, metal deactivators, optical brighteners, flame retardants, antifogging agents, and combinations of two or more thereof.

Advantageously, at least one further component comprises a heavy metal. Heavy metal components according to the invention are compounds comprising metals which are subject to regulations, in particular with regard to their discharge to environment. For example, the heavy metal is selected from the group comprising lead, cadmium, barium, tin, or a mixture of two or more thereof. Heavy metal-containing components may be soluble or insoluble in the solvent.

Preferred soluble heavy metal compounds are soluble organic heavy metal compounds, for example organic cadmium compounds selected from the group consisting of cadmium laurate and cadmium stearate, organic lead compounds selected from the group consisting of neutral lead stearate, dibasic lead stearate, organic barium compounds selected from the group consisting of barium stearate and barium laurate, and organic tin compounds selected from the group consisting of dimethyl tin dithioglycolate und dioctyl tin dithioglycolate.

Preferred insoluble heavy metal compounds are inorganic heavy metal compounds, for example tribasic lead sulfate, tetrabasic lead sulfate and dibasic lead phosphite, and insoluble organic heavy metal compounds, for example dibasic lead phthalate.

The halogenated polymer starting material may comprise 0.01 wt.-% to 5 wt.-% of heavy metals and heavy metal containing components, based on the total weight of the halogenated polymer.

The solvent according to the invention is a solvent which can dissolve at least 10 g of the halogenated polymer per liter of said solvent. Whether a solvent is capable of dissolving the halogenated polymer can be predicted by considering the solubility parameters of the solvent and the polymer, and the degree of hydrogen bonding (see "Properties of Polymers", D.W. Van Krevelen, 1990 edition, pp. 200-203). The solubility parameter of a component is defined as the square root of its cohesive energy density (see "Polymer Handbook", J. Brandrup and E.H. Immergut, Editors, Second Edition, p. IV- 337). The solvent capable of dissolving the halogenated polymer is generally chosen from those having a solubility parameter close to that of PVC. The term "close" is equivalent to "not differing by more than 6 units, preferably by not more than 4 units or by not more than 2 units or by not more than 1 unit". Tables of the solubility parameters of polymers and solvents are disclosed for example in "Properties of Polymers", D.W. Van Krevelen, 1990 edition, pp. 200-203 and "Polymer Handbook", J. Brandrup and E.H. Immergut, Editors, Second Edition, p. IV- 341 to IV-359. The solvent capable of dissolving the halogenated polymer is further generally chosen from those having a degree of hydrogen bonding which is similar. Thus, for choosing a suitable solvent, they are divided into three classes, namely poorly, moderately and strongly hydrogen bonded. For halogenated polymers according to the present invention, suitable solvents are preferably selected from the lists of solvents having a poor or moderate hydrogen bonding tendency (see "Properties of Polymers", D.W. Van Krevelen, 1990 edition, pp. 203).

Preferably, the solvent is selected from the group consisting of dioxane, acetone, ethyl acetate, halogenated organic solvents, methylethylketone, methylpropylketone, methylisopropylketone methylbutylketone, methylisobutylketone, tetrahydrofurane and a combination of two or more thereof.

The mixing ratio according to step (a) may be in the range of from 10 to 300 g of the ground halogenated polymer starting material per 1 L solvent, preferably from 50 to 200 g of the ground halogenated polymer starting material per 1 L solvent.

The composition obtained by mixing the halogenated polymer starting material and the solvent according to step (a) may comprise an amount of from 10 to 300 g of the halogenated polymer per 1 L solvent, preferably from 50 to 200 g of the halogenated polymer per 1 L solvent.

The composition obtained by mixing the ground halogenated polymer starting material and the solvent comprises a continuous phase and a discontinuous phase.

The continuous phase comprises at least part of the halogenated polymer and at least part of the solvent.

The continuous phase is a solution.

The solvent in the continuous phase comprises less than 8 wt.-% of water, based on the total weight of the continuous phase.

At least 90 wt.-% of the halogenated polymer are comprised in the continuous phase, based on the total amount of halogenated polymer in the halogenated polymer starting material, preferably at least 99 wt.-%, more preferably at least 99.9 wt.-%.

The continuous phase may further comprise at least one component selected from the group consisting of organic additives, and organic heavy metal compounds which are soluble in the solvent. Preferably, organic heavy metal compounds which are soluble in the solvent are organic cadmium compounds, organic barium compounds, organic tin compounds, and organic lead compounds.

For example, the organic heavy metal compounds which are soluble in the solvent may be of the formula

M1Rₘ.

Therein, M1 is a heavy metal, preferably selected from the group consisting of Pb, Cd, and Ba. R is a conjugate base of an organic acid having from six to twenty-four carbon atoms. For example, R is selected from the group consisting of a linear or branched organic acid, a saturated or unsaturated organic acid, a substituted or unsubstituted organic acid, an aliphatic organic acid, an aromatic organic acid, an alicyclic organic acid, an oxygen-containing heterocyclic organic acid, dicarboxylic acid, polyprotic carboxylic acids, and combinations thereof, all having from six to twenty-four carbon atoms. The parameter m is 1 or 2. Preferably, R is laurate or stearate.

For example, the organic heavy metal compounds which are soluble in the solvent may be heavy metal thioglycolates of the formula

R³ₐM1R¹_{b}.

Therein, M1 is a heavy metal, preferably Sn. R¹ is of formula -S-CH₂-C(O)O-R², where R² is H or a linear or branched alkyl group with having from six to twenty-four carbon atoms. R³ is a linear alkyl group having from 1 to 8 carbon atoms. The parameter a is 1 or 2. The parameter b is 2 or 3. Preferably, the heavy metal thioglycolates are dialkyl tin dithioglycolates.

Preferably, organic heavy metal compounds which are soluble in the solvent are organic cadmium compounds selected from the group consisting of cadmium laurate and cadmium stearate, organic lead compounds selected from the group consisting of neutral lead stearate, dibasic lead stearate, organic barium compounds selected from the group consisting of barium stearate and barium laurate, and organic tin compounds selected from the group consisting of dimethyl tin dithioglycolate und dioctyl tin dithioglycolate.

The discontinuous phase comprises at least part of the one or more further components. The discontinuous phase may be dispersible but is insoluble in the continuous phase. The discontinuous phase may comprise at least one of inorganic materials, and heavy metal compounds which are insoluble in the solvent.

For example, the discontinuous phase may comprise an insoluble heavy metal compound, e.g., tribasic lead sulfate, tetrabasic lead sulfate, dibasic lead phosphite, dibasic lead phthalate or insoluble heavy metal salts derived from organic soluble heavy metal stabilizers such as the ones mentioned above and combinations of two or more thereof.

The discontinuous phase may comprise insoluble inorganic materials. Insoluble inorganic materials may be selected from inorganic antacids, inorganic pigments, inorganic fillers, and combinations of two or more thereof.

Inorganic materials are for example metal perchlorates, metal oxides, metal hydroxides, metal carbonates, metal chlorides, metal bicarbonates, metal phosphates, metal phosphites, metal sulfates, metal sulfides, metal sulfide, metal thiosulfate, metal perchlorate, metal peroxosulfate, metal hydrogen phosphate, metal hydrogen phosphite, metal halogenide, metal nitrate, metal nitrite, metal hydrogen sulfate, metal hydrogen carbonate, metal hydrogen sulfite, metal hydrogen sulfide, metal dihydrogen phosphate, metal dihydrogen phosphite, and natural or synthetic inorganic materials (such as hydrotalcites, hydrocalumites, pyrocatecholates, zeolites or silicates).

Inorganic pigments are for example titanium dioxide, carbon black, Fe₂O₃, Sb₂O₃, spinels like cobalt blue and cobalt green, Cd(S,Se) and ultramarine blue.

Inorganic fillers are for example chalk, dolomite, limestone, wollastonite, silicate, glass fibers, talc, clays, carbon black and graphite.

### Step (b)

In a step (b), the continuous phase and the discontinuous phase are separated.

The continuous phase and the discontinuous phase may be separated by any method known in the art which is suitable for separating a continuous and a discontinuous phase. For example, the continuous phase and the discontinuous phase are separated by filtration, centrifugation, sedimentation, decantation or combinations of two or more thereof. Preferably, the composition is centrifuged, followed by decanting the continuous phase. The separation step can be performed in a continuous manner or batchwise.

### Optional steps

The process according to the invention may optionally comprise further steps.

The process according to the invention may further comprise a treating step. The treating step comprises treating the continuous phase after separation from the discontinuous phase to reduce the content of the at least one further component in the continuous phase, and precipitation of at least part of the at least one further component. It is preferred that the treating step is carried out to reduce the heavy metal content in the continuous phase.

For example, the heavy metal content of the continuous phase is reduced by at least 60 wt.-%, based on the heavy metal content of the continuous phase before the further treating step, preferably by at least 70 wt.-%, more preferably by at least 80 wt.-% or at least 90 wt.-%. For example, the heavy metal content of the continuous phase is reduced to less than 0.1 wt.-% preferably less than 0.05 wt.-% or even less than 0.02 wt.-%, based on the total amount of the halogenated polymer in the continuous phase.

The continuous phase may be treated by adding a treatment agent. Suitable treatment agents are acids or diluted acids or aqueous solutions of acidic salts For example, suitable acids may have a pKs value of from 4.5 to -3.

Preferably, the acid is selected from the group consisting of acetic acid, nitric acid, sulfuric acid, hydrochloric acid or mixtures of two or more thereof.

It may be preferred that the treatment agent is added in a weight ratio treatment agent to continuous phase of from 0.1:100 to 20:100, preferable from 0.3:100 to 10:100, more preferably from 0.5:100 to 5:100.

Where an acidic treatment agent is used, it is preferred that the treated continuous phase is neutralized with a neutralizing agent. For example, the neutralizing agent can be an inorganic base, e.g., having a pKb value in the range of from 5 to -1, preferably selected from the group consisting of metal hydroxides, metal carbonates, metal oxides and ammonia. Preferred metals are alkaline and earth alkaline metals, for example sodium, potassium, magnesium and calcium. It is preferred to use magnesium or calcium hydroxide or magnesium or calcium oxide as a neutralizing agent to neutralize the treated continuous phase.

It is also possible in the context of this invention that the treated continuous phase is not neutralized.

The treatment step can further include drying the treated continuous phase. Preferred drying agents include for example anhydrous sodium sulfate. For example, the continuous phase is dried by adding the drying agent to the continuous phase and intimately mixing, preferably by stirring or shaking.

Where the method comprises a treatment step, precipitation step, or both, the treated continuous phase is separated from a solid phase. The separation is preferably carried out as described above in relation to step (b). All examples and preferences described for step (b) are also suitable for the separation of the treated continuous phase from a solid phase resulting from the treating step.

### Step (c)

The process according to the invention further comprises adding additives to the continuous phase after separation from the discontinuous phase, and after the optional further treating step. Any additives commonly used when processing of halogenated polymers may be used.

According to the present invention, suitable additives are fatty acid salts. Preferred fatty acid salts are metal salts of saturated or unsaturated, linear or branched, aromatic, cycloaliphatic, or aliphatic carboxylic acids or hydroxycarboxylic acids preferably having from 2 to 22 carbon atoms.

Preferred metals are alkaline and earth alkaline metals, for example sodium, potassium, magnesium and calcium, more preferred are magnesium and calcium.

Examples of suitable carboxylic acid anions encompass anions of monovalent carboxylic acids, such as acetic acid, propionic acid, butteric acid, valeric acid, hexanoic acid, enanthic acid, octanoic acid, neodecanoic acid, 2-ethylhexanoic acid, pelargonic acid, decanoic acid, undecanoic acid, dodecanoic acid, tridecanoic acid, myristic acid, palmitic acid, lauric acid, isostearic acid, stearic acid, 12-hydroxystearic acid, 9,10-dihydroxystearic acid, oleic acid, 3,6-dioxaheptanoic acid, 3,6,9-trioxadecanoic acid, behenic acid, benzoic acid, p-tert-butylbenzoic acid, dimethylhydroxybenzoic acid, 3,5-di-tert-butyl-4-hydroxybenzoic acid, toluic acid, dimethylbenzoic acid, ethylbenzoic acid, n-propylbenzoic acid, salicylic acid, p-tert-octylsalicylic acid, sorbic acid, anions of divalent carboxylic acids and of their monoesters, e.g. oxalic acid, malonic acid, maleic acid, tartaric acid, zimaric acid, mandelic acid, malic acid, glycolic acid, oxalic acid, salicylic acid, polyglycoldicarboxylic acids whose degree of polymerization is from about 10 to about 12, phthalic acid, isophthalic acid, terephthalic acid, or hydroxyphthalic acid, anions of tri- or tetravalent carboxylic acids and their mono-, di-, or triesters, e.g. hemimellitic acid, trimellitic acid, pyromellitic acid, or citric acid, and also "superbasic" carboxylates as described for example in DE 41 06 404 A or in DE 40 02 988 A, the disclosure in that document is expressly incorporated herein by reference and is considered to be part of the disclosure of the present text.

Preferred are fatty acid salts whose anions are derived from saturated or unsaturated carboxylic acids or hydroxycarboxylic acids having from about 8 to about 20 carbon atoms, for example stearates, oleates, laurates, palmitates, behenates, neodecanoates, versatates, hydroxystearates, dihydroxystearates, p-tert-butylbenzoates, or (iso)octanoates, more preferably laurates and stearates.

It can be preferred that the fatty acid salt is selected from the group consisting of calcium stearate, calcium laurate, calcium 12-hydroxystearate, magnesium stearate, magnesium laurate, magnesium 12-hydroxystearate, zinc laurate, zinc stearate and zinc 12-hydroxystearate.

The amount of the metal soaps can be up to 20 wt.-%, for example from 0 wt.-% to 15 wt.-%, or from 0.1 to 10 wt.-%, or from 0.2 to 8 wt.-%, or from 0.5 to 6 wt.-%, or from 1 to 3 wt.-%, based on the total weight of the additives.

According to the present invention, suitable additives are hydrotalcites, zeolites, and hydrocalumites. Suitable hydrotalcites, zeolites, and hydrocalumites are described for example on pages 27 to 29 of EP 1 046 668 A, on pages 3, 5, and 7 of EP 256 872 A, on pages 2 and 3 of DE 41 06 411 C, or on pages 2 and 3 of DE 41 06 404 C. Preferably, hydrotalcite is added.

The amounts of the hydrotalcites, zeolites, and hydrocalumites can be up to 35 wt.-%, for example up to 25 wt.-%, based on the total weight of the additives.

According to the present invention, suitable additives are metal oxides and metal hydroxides. The metal cations of the metal oxides and metal hydroxides are, for example, divalent cations, preferably the cations of calcium, magnesium, zinc, or mixtures thereof, more preferably calcium.

The amount of the metal oxides, and metal hydroxides, or of mixtures of two or more thereof can be up to 20 wt.-%, for example from 0 wt.-% to 10 wt.-%, or from 0.1 to 8 wt.-%, or from 0.2 to 6 wt.-%, or from 0.5 to 5 wt.-%, or from 1 to 3 wt.-%, based on the total weight of the additives.

According to the present invention, suitable additives are polyols. Examples of suitable polyols are pentaerythritol, dipentaerythritol, tripentaerythritol, bistrime-thylolpropane, inositol, polyvinyl alcohol, bistrimethylolethane, trimethylolpropane, sorbitol, maltitol, isomaltitol, lactitol, lycasine, mannitol, lactose, leucrose, tris(hydroxyethyl) isocyanurate, palatinitol, tetramethylolcyclohexanol, tetramethylolcyclopentanol, tetramethylolcyclo-heptanol, glycerol, diglycerol, polyglycerol, thiodiglycerol, tris-2-hydroxyethyl isocyanurate (THEIC), trimethylol propane, polyol esters, glycols, and polyglycols. Preferred polyols are pentaerythritol, dipentaerythritol, and THEIC.

The amount of polyols can be up to 20 wt.-%, for example from 0 wt.-% to 10 wt.-%, or from 0.1 to 8 wt.-%, or from 0.2 to 6 wt.-%, or from 0.5 to 5 wt.-%, or from 1 to 3 wt.-%, based on the total weight of the additives.

According to the present invention, suitable additives are 1,3-dicarbonyl compounds, in particular β-diketones and β-ketoesters.

For the purposes of the present invention, suitable dicarbonyl compounds are those of the general formula R^{a}C(O)CHR^{b}-C(O)R^{c}, examples of these being those described on page 5 of EP 1 046 668 A. Examples of particularly suitable compounds are acetylacetone, butanoylacetone, heptanoylacetone, stearoylacetone, palmitoylacetone, lauroylacetone, 7-tert-nonylthioheptane-2,4-dione, benzoylacetone, dibenzoylmethane, lauroylbenzoylmethane, palmitoylbenzoylmethane, stearoylbenzoylmethane, isooctylbenzoylmethane, 5-hydroxycapronylbenzoylmethane, tribenzoylmethane, bis(4-methylbenzoyl)methane, benzoyl-p-chlorobenzoylmethane, bis(2-hydroxybenzoyl) methane, 4-methoxybenzoylbenzoylmethane bis(4-methoxybenzoyl)methane, benzoylformylmethane, benzoylacetylphenyl methane, 1-benzoyl-1-acetylmethane, stearoyl-4-methoxybenzoylm ethane, bis(4-tertbutylbenzoyl)methane, benzoylphenylacetylmethane, bis(cyclohexanoyl)methane, dipivaloylmethane, 2-acetylcyclopentanone, 2-benzoylcyclopentanone, the methyl, ethyl, butyl, 2-ethylhexyl, dodecyl, or octadecyl esters of diacetoacetic acid, and also propionyl- or butyrylacetic acids having from 1 to 18 carbon atoms, and also the ethyl, propyl, butyl, hexyl, or octyl ester of stearoylacetic acid, or polynuclear β-ketoesters as described in EP 433 230 A, or dehydroacetic acid, and also its zinc, magnesium or alkali metal salts, or the alkali metal, alkaline earth metal or zinc chelates of these compounds.

Preferred 1,3-dicarbonyl compounds are dibenzoylmethane, lauroylbenzoylmethane, palmitoylbenzoylmethane, stearoylbenzoylmethane, isooctylbenzoylmethane, and stearoyl-4-methoxybenzoylmethane, more preferred stearoylbenzoylmethane.

The amount of 1,3-dicarbonyl compounds can be up to about 20 wt.-%, for example from 0 wt.-% to about 15 wt.-%, or from about 0.1 to about 10 wt.-%, or from about 0.2 to about 8 wt.-%, or from about 0.5 to about 5 wt.-%, or from about 1 to about 3 wt.-%, based on the total weight of the additives.

According to the present invention, suitable additives are lubricants, such as paraffin waxes, polyethylene waxes, polypropylene waxes, montan waxes, ester lubricants, for example, fatty acid esters, multifunctional fatty acid ester, purified or hydrogenated natural or synthetic triglycerides, or partial esters, amide waxes, chloroparaffins, glycerol esters, or alkaline earth metal soaps.

Examples of suitable lubricants are also described in "Kunststoffadditive" [Plastics additives] (R. Gächter and H. Muller, Carl Hanser Verlag, 3rd edition, 1989, pp. 478-488). For the purposes of the present invention, particularly suitable lubricants are those of the Baerolub^{®} product line from Baerlocher GmbH (Unterschleißheim, Germany).

The amount of lubricants can be up to 70 wt.-%, in particular up to 50 wt.-%, for example from 0 wt.-% to 30 wt.-%, or from 0.1 to 20 wt.-%, or from 0.2 to 15 wt.-%, or from 0.5 to 10 wt.-%, based on the total weight of the additives.

According to the present invention, suitable additives are phenolic antioxidants. Examples of phenolic antioxidants are alkylated phenols, alkylated thiomethyl phenols, alkylated hydrochinones, hydroxylated thiodiphenyl ethers, alkylidene bisphenols, benzyl compounds, hydroxybenzylated malonates, aromatic hydroxybenzylated compounds, triazine compounds, acyl aminophenols, β-(3,5-di-tert-butyl-4-hydroxyphenyl)propionic acid esters, β-(5-tert-butyl-4-hydroxy-3-methylphenyl)propionic acid esters, β-(3,5-Dicyclohexyl-4-hydroxyphenyl)propionic acid esters, 3,5-di-tert-butyl-4-hydroxyphenyl acetic acid esters, and β-(3,5-di-tert-butyl-4-hydroxyphenyl)propionic acid amides. For example, the phenolic additives are selected from alkylated monophenols, alkylated thiomethyl phenols, alkylated hydrochinones, hydroxylated thiodiphenyl ethers, alkylidene bisphenols, or β-(3,5-di-tert-butyl-4-hydroxyphenyl)propionic acid esters.

Useful antioxidants are described on pages 33 to 35 of EP 1 046 668 A. For the purposes of the present invention, preferred antioxidants used are the products in the Irganox^{®} product line (producer: formerly Ciba Specialty Chemicals, now BASF), e.g. Irganox^{®} 1010 or 1076, or products from the Lowinox product line from Great Lakes.

It can be preferred that 3,5-di-tert-butyl-4-hydroxyphenylpropionic acid esters with octanol, octadecanol or pentaerythritol are added as antioxidant additives.

According to the present invention, suitable additives are organic plasticizers. Examples of suitable plasticizers are compounds from the group of the phthalic esters, such as dimethyl, diethyl, dibutyl, dihexyl, di-2-ethylhexyl, di-n-octyl, diisooctyl, diisononyl, diisodecyl, dicyclohexyl, dimethylcyclohexyl, dimethyl glycol, dibutyl glycol, benzyl butyl, or diphenyl phthalate, and also mixtures of phthalates, for example mixtures of alkyl phthalates having from 7 to 9 or from 9 to 11 carbon atoms in the ester alcohol, or a mixture of alkyl phthalates having from 6 to 10 or from 8 to 10 carbon atoms in the ester alcohol. Preferred plasticizers for the purposes of the present invention are dibutyl, dihexyl, di-2-ethylhexyl, di-n-octyl, diisooctyl, diisononyl, diisodecyl, diisotridecyl, and benzyl butyl phthalate, and mixtures of these alkyl phthalates.

Other suitable plasticizers are the esters of aliphatic dicarboxylic acids, in particular the esters of adipic, azelaic, cyclohexyl dicarboxylic acid or sebacic acid, or a mixture of two or more thereof. Examples of these plasticizers are di-2-ethylhexyl adipate, diisooctyl adipate, Hexamoll DINCH^{®}, diisononyl adipate, diisodecyl adipate, benzyl butyl adipate, benzyl octyl adipate, di-2-ethylhexyl azelate, di-2-ethylhexyl sebacate, and diisodecyl sebacate, preferably di-2-ethylhexyl acetate, Hexamoll DINCH^{®} and diisooctyl adipate.

Equally suitable plasticizers are trimellitic esters, such as tri-2-ethylhexyl trimellitate, triisotridecyl trimellitate, triisooctyl trimellitate, and also trimellitic esters having from 6 to 8 carbon atoms, from 6 to 10 carbon atoms, from 7 to 9 carbon atoms, or from 9 to 11 carbon atoms in the ester group, or mixtures of two or more thereof.

Examples of other suitable plasticizers are the polymeric plasticizers described in "Kunststoffadditive" [Plastics additives] (R. Gächter and H. Muller, Carl Hanser Verlag, 3rd edition, 1989, chapter 5.9.6, pages 412-415), or "PVC Technology" (W. V. Titow, 4th edition, Elsevier Publishers, 1984, pages 165-170). Examples of the starting materials most commonly used for the preparation of polyester plasticizers are dicarboxylic acids, such as adipic, phthalic, azeleic, or sebacic acid, and diols, such as 1,2-propanediol, 1,3-butanediol, 1,4-butanediol, 1,6-hexanediol, neopentyl glycol, or diethylene glycol, or mixtures of two or more thereof.

Equally suitable plasticizers are the phosphoric esters described in "Taschenbuch der Kunststoffadditive" [Plastics additives handbook] (chapter 5.9.5, pages 408-412). Examples of suitable phosphoric esters are tributyl phosphate, tri-2-ethylbutyl phosphate, tri-2-ethylhexyl phosphate, trichloroethyl phosphate, 2-ethylhexyl diphenyl phosphate, triphenyl phosphate, tricresyl phosphate, or trixylenyl phosphate, or mixtures of two or more thereof.

Other suitable plasticizers are chlorinated hydrocarbons (paraffins) or the hydrocarbons described in "Kunststoffadditive" [Plastics additives] (R. Gächter and H. Muller, Carl Hanser Verlag, 3rd edition, 1989, chapter 5.9.14.2, 25 pages 422-425 and chapter 5.9.14.1, page 422).

The amount of organic plasticizers is up to 70 wt.-%, in particular up to 50 wt.-%, for example from 0 wt.-% to 30 wt.-%, or from 0.1 to 15 wt.-%, or from 0.2 to 10 wt.-%, based on the total weight of the additives.

According to the present invention, suitable additives are epoxy compounds. For example, the epoxy compounds are epoxidized fatty acid esters. Preferably, the epoxidized fatty acid esters are composed of an epoxidized fatty acid and an alkyl residue.

Epoxidized fatty acids are obtainable via epoxidation of unsaturated fatty acids, preferably unsaturated fatty acids with 12 to 24 carbon atoms, for example myristoleic acid, palmitoleic acid, sapienic acid, oleic acid, elaidic acid, vaccenic acid, linoleic acid, linoelaidic acid, a-linolenic acid, gondoic acid, arachidonic acid, or eurucic acid. [0054] Preferred alkyl residues arelinear or branched alkyl residues with 1 to 12 carbon atoms, for example methyl, ethyl, n-propyl, i-propyl, n-butyl, i-butyl, t-butyl, n-hexyl or 2-ethylhexyl. A preferred epoxy compound is 2-ethylhexyl epoxystearate.

Further examples of epoxy compounds are epoxidized soya oil, epoxidized olive oil, epoxidized linseed oil, epoxidized castor oil, epoxidized peanut oil, epoxidized maize oil, epoxidized cottonseed oil, and glycidyl compounds.

Glycidyl compounds contain a glycidyl group directly bonded to a carbon atom, oxygen atom, nitrogen atom, or sulfur atom. Glycidyl esters or methylglycidyl esters are obtainable via reaction of a compound having at least one carboxy group in the molecule and epichlorohydrin or glycerol dichlorohydrin, or methylepichlorohydrin. The reaction advantageously takes place in the presence of bases.

Examples of compounds that can be used having at least one carboxy group in the molecule are aliphatic carboxylic acids. Examples of these acids are glutaric acid, adipic acid, pimelic acid, suberic acid, azelaic acid, sebacic 40 acid, or dimerized or trimerized linoleic acid, acrylic acid, methacrylic acid, caproic acid, caprylic acid, lauric acid, myristic acid, palmitic acid, stearic acid, or pelargonic acid. Cycloaliphatic carboxylic acids are equally suitable, for example cyclohexanecarboxylic acid, tetrahydrophthalic acid, 4-methyltetrahydrophthalic acid, hexahydrophthalic acid, endomethylenetetrahydrophthalic acid, or 4-methylhexahydrophthalic acid. Other suitable compounds are aromatic carboxylic acid, such as benzoic acid, phthalic acid, isophthalic acid, trimellitic acid, or pyromellitic acid.

The amount of epoxy compound can be up to 20 wt.-%, for example from 0 wt.-% to 10 wt.-%, or from 0.1 to 8 wt.-%, or from 0.2 to 6 wt.-%, or from 0.5 to 5 wt.-%, or from 1 to 3 wt.-%, based on the total weight of the additives.

Examples of suitable perchlorates are compounds of the formula M(ClO₄)ₖ. Therein, M is an organic or inorganic cation. The index k corresponds to the valency of M, and is an integer of 1, 2 or 3. Suitable inorganic cations are for example Li, Na, K, Mg, Ca, Sr, Zn, Al, La, Ce, or NH₄. Suitable organic cations are for example onium ions, namely ammonium cations, sulfonium cations and phosphonium cations. Preferably, the perchlorate is selected from the group consisting of LiClO₄, NaClO₄, KClO₄ und NH₄ClO₄, and combinations of two or more thereof.

The amount of perchlorates can be up to 5 wt.-%, for example from 0 wt.-% to 5 wt.-%, or from 0.001 to 3 wt.-%, or from 0.002 to 1 wt.-%, or from 0.005 to 0.5 wt.-%, or from 0.01 to 0.2 wt.-%, based on the total weight of the additives.

Examples of suitable blowing agents are organic azo and hydrazo compounds, tetrazoles, oxazines, isatoic anhydride, salts of citric acid, such as ammonium citrate, and also soda and sodium bicarbonate. Examples of particularly suitable compounds are ammonium citrate, azodicarbonamide, or sodium bicarbonate, or a mixture of two or more thereof. Examples of suitable blowing agents are organic azo and hydrazo compounds, tetrazoles, oxazines, diphenoxy-4,4'-disulphohydrazide, isatoic anhydride, salts of citric acid, such as ammonium citrate, and also soda and sodium bicarbonate. Examples of particularly suitable compounds are diphenoxy- 4,4' disulph hydrazide, ammonium citrate, azodicarbonamide, or sodium bicarbonate, or a mixture of two or more thereof.

Pigments are also suitable as additives according to the present invention. Examples of suitable inorganic pigments are titanium dioxide, carbon black, Fe₂O₃, Sb₂O₃, (Ba,Sb)O₂, Cr₂O₃, spinells, such as cobalt blue and cobalt green, Cd(S,Se), or ultramarine blue. Examples of suitable organic pigments are azo pigments, phthalocyanine pigments, quinacridone pigments, perylene pigments, diketopyrrolopyrrol pigments, and anthraquinone pigments.

According to the present invention, fillers as described in "Handbook of PVC Formulating" (E.J. Wickson, John Wiley & Sons, Inc., 1993, pages 393-449), or reinforcing agents as described in "Taschenbuch der Kunststoffadditive" [Plastics additives handbook] (R. Gächter and H. Muller, Carl Hanser Verlag, 1990, pages 549-615) can be added.

Examples of particularly suitable fillers or reinforcing agents are calcium carbonate (chalk), dolomite, wollastonite, magnesium oxide, magnesium hydroxide, silicate, glass fibers, talc, kaolin, carbon black, or graphite, wood flour, or other renewable raw materials. It can be preferred that chalk is added as a filler.

According to the present invention, UV absorbers, light stabilizers, and combinations of two or more thereof can be added.

According to the present invention impact modifiers and processing aids, antistatics, biocides, metal deactivators, optical brighteners, flame retardants, and antifogging compounds can also be added. Suitable compounds are described for example in "Kunststoff Additive" [Plastics additives] (R. Keßler and H. Muller, Carl Henser Verlag, 3rd edition, 1989, and in "Handbook of PVC Formulating", E.J. Wilson, J. Wiley & Sons, 1993). Preferred processing aids are acrylate polymers, for example PMMA.

Preferably, the additives are selected from the group consisting of fatty acid salts, hydrotalcites, metal oxides, metal hydroxides, polyols, 1,3-dicarbonyl compounds, lubricants, antioxidants, plasticizers, epoxy compounds, metal perchlorates, blowing agents, pigments, fillers, UV absorbers, light stabilizers, impact modifiers, processing aids, antistatics, biocides, metal deactivators, optical brighteners, flame retardants, antifogging agents, and combinations of two or more thereof

Preferably, the additives are added by stirring, shaking or a combination thereof.

### Step (d)

In a step (d), the solvent is evaporated from the continuous phase to provide a halogenated polymer product.

Evaporation of the solvent can be carried out under a pressure determined by the temperature. Generally, the solvent is evaporated at an elevated temperature and a reduced pressure.

For example, the solvent is evaporated at a temperature of from 1 to 50°C above the boiling point of the solvent at the applied pressure, preferably of from 5 to 20°C above the boiling point of the solvent at the applied pressure.

It may be preferred that the pressure is reduced during the evaporation process. For example, the pressure may be reduced during the evaporation process, so that the residual solvent percentage of less than 1 wt.-% preferably less than 0.5 wt.-% or even less than 0.01 wt.-% based on the total amount of the halogenated polymer in the continuous phase.

It may be preferred that the temperature is increased during the evaporation process. For example, the temperature may be increased during the evaporation process, so that the residual solvent percentage of less than 1 wt.-% preferably less than 0.5 wt.-% or even less than 0.01 wt.-% based on the total amount of the halogenated polymer in the continuous phase.

It may be preferred that the temperature is increased and the pressure is reduced during the evaporation process. For example, the temperature may be increased and the pressure may be reduced during the evaporation process, so that the residual solvent percentage of less than 1 wt.-% preferably less than 0.5 wt.-% or even less than 0.01 wt.-% based on the total amount of the halogenated polymer in the continuous phase.

The halogenated polymer product may comprise a residual solvent percentage of less than 1 wt.-% preferably less than 0.5 wt.-% or even less than 0.01 wt.-% based on the total amount of the halogenated polymer in the continuous phase

The halogenated polymer product preferably has a heavy metal content which is below the heavy metal content of the halogenated polymer starting material, more preferably a heavy metal content of less than 0.1 wt.-% preferably less than 0.05 wt.-% or even less than 0.02 wt.-%, based on the total amount of the halogenated polymer in the halogenated polymer product.

The process according to the invention may further comprise re-using the evaporated solvent.

The evaporated solvent may be re-introduced into the mixing step (a) of the process. It is possible according to the invention to use only the evaporated solvent in step (a). It is also possible to use a mixture of the evaporated solvent and virgin solvent in step (a).

It is preferred that the process according to the invention is carried out either in the absence of water, or such that any water added in the process is removed prior to the evaporation step. Thereby, the solvent may easily be re-used without extensive work-up and purification steps.

For example, water may be used in the treatment step of the process. Preferably, water is only used in the treatment step of the process. The amount of water is preferably less than 10 wt.-%, based on the total amount of solvent in the continuous phase, for example, less than 5 wt.-% or less than 2 wt.-%, more preferably less than 1 wt.-%. It is preferred that the continuous phase is dried before evaporation. Preferably, when water is added during the process, the continuous phase is dried before evaporation. Drying is preferably carried as described above, for example by adding the drying agent to the continuous phase and intimately mixing, preferably by stirring or shaking. Preferred drying agents include for example anhydrous sodium sulfate.

It is preferred that the process according to the invention is a process for for recycling halogenated polymers.

If the halogenated polymer starting material comprises heavy metals, heavy metal containing components, or both, the heavy metal content in the halogenated polymer starting material is higher than the heavy metal content in the recycled halogenated polymer product.

The halogenated polymer starting material may comprise 0.01 wt.-% to 5 wt.-% of heavy metals and heavy metal containing components, based on the total weight of the halogenated polymer of the halogenated polymer starting material.

The recycled halogenated polymer product preferably has a heavy metal which is below the heavy metal content of the halogenated polymer starting material, more preferably a heavy metal content of less than 0.1 wt.-% preferably less than 0.05 wt.-% or even less than 0.02 wt.-%, based on the total amount of the halogenated polymer in the recycled halogenated polymer product.

The method for recycling halogenated polymer starting materials that includes the removal of heavy metals from the halogenated polymer starting materials, such that the heavy metal content in the halogenated polymer product is lower than the heavy metal content in the halogenated polymer starting material. The recovered halogenated polymer can be added either into a conventional dry-blending process, or directly at the extruder. If the stabilizers are added prior to the evaporation of the solvent, the recovered halogenated polymer can be suitable for direct extrusion.

The invention further relates to a process for making a polymer article. The process comprises
i. providing a halogenated polymer product obtained by a method according to the invention; and
ii. processing the halogenated polymer product to obtain a polymer article, wherein the halogenated polymer product is processed by
   a) mixing it with virgin halogenated polymer and one or more stabilizing components;
   b) adding stabilizing components; or
   c) adding the halogenated polymer product to a mixture of virgin halogenated polymer and optionally one or more stabilizing components during an extrusion process.

The halogenated polymer product can be processed in order to obtain a polymer article. The halogenated polymer product can be processed by any methods known in the art for processing halogenated polymers, for example by calendaring, extruding, injection molding, sintering, extrusion blow molding, or the plastisol process in order to obtain a polymer article.

For processing, the halogenated polymer product comprises one or more additives. Any additives commonly used when processing of halogenated polymers may be used. Preferably, the additives are selected from the group consisting of fatty acid salts, hydrotalcites, metal oxides, metal hydroxides, polyols, 1,3-dicarbonyl compounds, lubricants, antioxidants, plasticizers, epoxy compounds, metal perchlorates, pigments, fillers, UV absorbers, light stabilizers, impact modifiers, processing aids, antistatics, biocides, metal deactivators, optical brighteners, flame retardants, antifogging agents, blowing agents, gelling agents and combinations of two or more thereof. Regarding preferences and examples of additives, reference is made to the above description of step (c).

Additives are added to the continuous phase prior to evaporating the solvent as described above for step (c). It is also possible to add further additives to the halogenated polymer product, i.e., after the evaporation step.

It may be preferred that the process only comprises adding additives before evaporating the solvent from the continuous phase according to step (c). Preferably, the process comprises adding additives before evaporating the solvent from the continuous phase (step (c)) and adding additives before processing the halogenated polymer product.

Preferably, the additives that are added to the halogenated polymer product are added by compounding.

For processing the halogenated polymer product, it may be mixed with virgin halogenated polymer and, optionally, one or more additives, preferably stabilizing components. The mixing of the halogenated polymer product with virgin halogenated polymer and, optionally, one or more additives is preferably carried out as described above in relation to step (a). All examples and preferences described for the mixing according to step (a) are also suitable for the mixing of the halogenated polymer product with virgin halogenated polymer and, optionally, one or more additives. For example, the halogenated polymer product may be mixed with virgin halogenated polymer and one or more stabilizing components.

For processing the halogenated polymer product, stabilizing components may be added. For the addition of stabilizing components, the same preferences and examples are valid as for the addition of additives as described above for step (c).

For processing the halogenated polymer product, it may be added to a mixture of virgin halogenated polymer and, optionally, one or more additives, preferably one or more stabilizing components, during an extrusion process. For example, the halogenated polymer product may be added to an extruded mixture of virgin halogenated polymer and one or more stabilizing components during the extrusion process. Adding the halogenated polymer product during the extrusion process means for example that the halogenated polymer product is added directly into the extruder while the extruder is loaded with the virgin halogenated polymer and, optionally, one or more additives, and running, e.g., by pouring or feeding halogenated polymer product into the extruder.

Stabilizing components are for example fatty acid salts, hydrotalcites, metal oxides, metal hydroxides, polyols, 1,3-dicarbonyl compounds, antioxidants, epoxy compounds, metal perchlorates UV absorbers, light stabilizers, processing aids, and combinations of two or more thereof.

The virgin halogenated polymer can be a polymer of vinyl chloride, including homopolymers (PVC), post-chlorinated polyvinyl chloride (C-PVC), copolymers of vinyl chloride with ethylene-type unsaturated compounds, PVC-VA (vinyl acetate) copolymers, PVC-acrylate, polymer mixtures of polyvinyl chloride with ethyl-vinyl acetate (EVA), acrylonitrile/butadiene-styrene (ABS), methacrylate-butadienestyrene (MBS), acrylonitrile butadiene (NBR), styrene-acrylonitrile (SAN), chlorinated polyethylene (CPE), polyalkylacrylate (PAA), polyalkylmethacrylate (PAMA), polyamides or polylactones. Preferably, the halogenated polymer is selected from the list consisting of homopolymers of vinyl chloride, post-chlorinated polyvinyl chloride, copolymers comprising vinyl chloride units, polymers of vinylidene chloride, and post-chlorinated polymers and copolymers of vinyl chloride, more preferably PVC and CPVC.

The virgin halogenated polymer can be a mixture of two or more of the above.

The halogenated polymer of the virgin halogenated polymer can be the same or different halogenated polymer as the halogenated polymer of the halogenated polymer product. Preferably, the halogenated polymer of the virgin halogenated polymer and the halogenated polymer of the halogenated polymer product are the same. More preferably, the halogenated polymer of the virgin halogenated polymer and the halogenated polymer of the halogenated polymer product are the same and selected from PVC and CPVC.

The invention further relates to a halogenated polymer product obtained by the process as described herein.

The halogenated polymer product has a heavy metal content of less than 0.1 wt.-% preferably less than 0.05 wt.-% or even less than 0.02 wt.-%, based on the total amount of the halogenated polymer in the halogenated polymer product.

The halogenated polymer product may comprise a residual solvent percentage of less than 1 wt.-% preferably less than 0.5 wt.-% or even less than 0.01 wt.-%, based on the total amount of the halogenated polymer in the halogenated polymer product.

The halogenated polymer product comprises one or more additives. Preferably, the halogenated polymer product is stabilized for further processing. Any additives commonly used when processing of halogenated polymers may be used. Preferably, the additives are selected from the group consisting of fatty acid salts, hydrotalcites, metal oxides, metal hydroxides, polyols, 1,3-dicarbonyl compounds, lubricants, antioxidants, plasticizers, epoxy compounds, metal perchlorates, pigments, fillers, UV absorbers, light stabilizers, impact modifiers, processing aids, antistatics, biocides, metal deactivators, optical brighteners, flame retardants, antifogging agents, blowing agents, gelling agents and combinations of two or more thereof. Regarding preferences and examples reference is made to the above description of step (c).

The invention further relates to a polymer article obtained by the process as described herein.

### Exemplary embodiments

The following embodiments further illustrate the invention and describe preferred combinations and sub-combinations of features of the invention. The following embodiments do not constitute claims, those can be found at the end of the document numbered with arabic numerals.
Embodiment A: A process for treating halogenated polymers comprising
   (a) mixing a ground halogenated polymer starting material with a solvent to provide
      a composition comprising a continuous phase and a discontinuous phase,
      wherein the halogenated polymer starting material comprises a halogenated polymer, and one or more further components;
      wherein the continuous phase comprises at least part of the halogenated polymer and at least part of the solvent, and wherein the continuous phase is a solution; and
      wherein the discontinuous phase comprises at least part of the one or more further components;
   (b) separating the continuous phase and the discontinuous phase;
   (c) adding additives to the continuous phase after separation from the discontinuous phase; and
   (d) evaporating the solvent from the continuous phase to provide a halogenated polymer product.
Embodiment B: The process of embodiment A, wherein the halogenated polymer starting material is rigid.
Embodiment C: The process of any one of the preceding embodiments, wherein at least one further component comprises a heavy metal, preferably wherein the heavy metal is selected from the group comprising lead, cadmium, barium or tin or a mixture of two or more thereof.
Embodiment D: The process of embodiment C, wherein the heavy metal content in the halogenated polymer starting material is higher than the heavy metal content in the halogenated polymer product.
Embodiment E: The process of any one of the preceding embodiments, wherein the solvent in the continuous phase comprises less than 8 wt.-% of water, based on the total weight of the continuous phase.
Embodiment F: The process of any one of the preceding embodiments, wherein the process is carried out in the absence of water.
Embodiment G: The process of any one of the preceding embodiments, wherein the halogenated polymer is selected from the list consisting of polymers of vinyl chloride, copolymers comprising vinyl chloride units, polymers of vinylidene chloride, and post-chlorinated polymers and copolymers of vinyl chloride, preferably PVC and CPVC.
Embodiment H: The process of any one of the preceding embodiments, wherein the halogenated polymer starting material comprises 0.01 wt.-% to 5 wt.-% of heavy metals and heavy metal containing components, based on the total weight of the halogenated polymer.
Embodiment I: The process of any one of the preceding embodiments, wherein the ground halogenated polymer starting material has a particle size of from 0.5 mm to 5 cm.
Embodiment J: The process of any one of the preceding embodiments, wherein the solvent is a solvent which can dissolve at least 10 g of halogenated polymer per liter of solvent, preferably a solvent selected from the group consisting of dioxane, acetone, ethyl acetate, halogenated organic solvents, methylethylketone, methylpropylketone, methylisopropylketone methylbutylketone, methylisobutylketone, tetrahydrofurane and a combination of two or more thereof.
Embodiment K: The process of any one of the preceding embodiments, wherein the mixing ratio is in the range of from 10 to 300 g of the ground halogenated polymer starting material per 1 L solvent, preferably from 50 to 300 g of the ground halogenated polymer starting material per 1 L solvent.
Embodiment L: The process of any one of embodiments A to J, wherein the composition comprises an amount of from 10 to 300 g of the halogenated polymer per 1 L solvent, preferably from 50 to 300 g of the halogenated polymer per 1 L solvent.
Embodiment M: The process of any one of the preceding embodiments, wherein at least 90 wt.-% of the halogenated polymer are comprised in the continuous phase, based on the total amount of halogenated polymer in the halogenated polymer starting material, preferably at least 99 wt.-%, more preferably at least 99.9 wt.-%.
Embodiment N: The process of any one of the preceding embodiments, wherein the continuous phase and the discontinuous phase are separated by filtration, centrifugation, sedimentation, decantation or combinations of two or more thereof.
Embodiment O: The process of any one of the preceding embodiments, wherein the continuous phase further comprises at least one component selected from the group consisting of organic additives, and organic heavy metal compounds which are soluble in the solvent, preferably wherein the organic heavy metal compounds are organic cadmium compounds selected from the group consisting of cadmium laurate and cadmium stearate, organic lead compounds selected from the group consisting of neutral lead stearate, dibasic lead stearate, organic barium compounds selected from the group consisting of barium stearate and barium laurate, and organic tin compounds selected from the group consisting of dimethyl tin dithioglycolate und dioctyl tin dithioglycolate.
Embodiment P: The process of any one of the preceding embodiments, wherein discontinuous phase comprises at least one of inorganic materials, and heavy metal compounds which are insoluble in the solvent, preferably tribasic lead sulfate, tetrabasic lead sulfate, dibasic lead phosphite, and dibasic lead phthalate.
Embodiment Q: The process of embodiment P further comprising treating the continuous phase after separation from the discontinuous phase to reduce the content of the at least one further component in the continuous phase, preferably to reduce the heavy metal content in the continuous phase, and precipitation of at least part of the at least one further component.
Embodiment R: The process of embodiment Q, wherein the heavy metal content of the continuous phase is reduced by at least 60 wt.-%, based on the heavy metal content of the continuous phase before the further treating step, preferably by at least 70 wt.-%, more preferably by at least 80 wt.-% or at least 90 wt.-%.
Embodiment S: The process of any one of embodiments P to Q, wherein the heavy metal content of the continuous phase is reduced to less than 0.1 wt.-% preferably less than 0.05 wt.-% or even less than 0.02 wt.-% based on the total amount of the halogenated polymer in the continuous phase.
Embodiment T: The process of any one of the preceding embodiments, wherein the additives are selected from the group consisting of fatty acid salts, hydrotalcites, metal oxides, metal hydroxides, polyols, 1,3-dicarbonyl compounds, lubricants, antioxidants, plasticizers, epoxy compounds, metal perchlorates, blowing agents, pigments, fillers, UV absorbers, light stabilizers, impact modifiers, processing aids, antistatics, biocides, metal deactivators, optical brighteners, flame retardants, antifogging agents, and combinations of two or more thereof.
Embodiment U: The process of any one of the preceding embodiments, wherein the additives are added by stirring, shaking or a combination thereof.
Embodiment V: The process of any one of the preceding embodiments, wherein the halogenated polymer product has a heavy metal content of less than 0.1 wt.-% preferably less than 0.05 wt.-% or even less than 0.02 wt.-%, based on the total amount of the halogenated polymer.
Embodiment W: The process of any one of the preceding embodiments, wherein the halogenated polymer product comprises a residual solvent percentage of less than 1 wt.-% preferably less than 0.5 wt.-% or even less than 0.01 wt.-% based on the total amount of the halogenated polymer in the continuous phase.
Embodiment X: The process of any one of the preceding embodiments comprising re-using the evaporated solvent.
Embodiment Y: The process of embodiment X, wherein the evaporated solvent is re-introduced into the mixing step (a) of the process.
Embodiment Z: The process of any one of the preceding embodiments for recycling halogenated polymers,
   wherein the halogenated polymer starting material comprises heavy metals, heavy metal containing components, or both, and
   wherein the heavy metal content in the halogenated polymer starting material is higher than the heavy metal content in the halogenated polymer product.
Embodiment AA: A process for making a polymer article comprising
   i. providing a halogenated polymer product obtained by a method according to any one of the preceding embodiments; and
   ii. processing the halogenated polymer product to obtain a polymer article, wherein the halogenated polymer product is processed by
      a) mixing it with virgin halogenated polymer and one or more stabilizing components;
      b) adding stabilizing components; or
      c) adding the halogenated polymer product to a mixture of virgin halogenated polymer and optionally one or more stabilizing components during an extrusion process.
Embodiment AB: The process of embodiment AA, wherein, in step ii., the additives are selected from the group consisting of fatty acid salts, hydrotalcites, metal oxides, metal hydroxides, polyols, 1,3-dicarbonyl compounds, lubricants, antioxidants, plasticizers, epoxy compounds, metal perchlorates, pigments, fillers, UV absorbers, light stabilizers, impact modifiers, processing aids, antistatics, biocides, metal deactivators, optical brighteners, flame retardants, antifogging agents, blowing agents, gelling agents and combinations of two or more thereof.
Embodiment AC: The process of any one of embodiments AA to AB wherein, in step ii., the additives are added by compounding.
Embodiment AD: The process of any one of embodiments AA to AC, wherein the halogenated polymer product is processed by calendaring, extruding, injection molding, sintering, extrusion blow molding, or the plastisol process.

### Examples

### Example 1 - reduction of lead content

250 g of starting material A (SM A) was dissolved in 3 L of methyl ethyl ketone at 80°C, the resulting composition was then centrifuged at 40°C for 15 min at 4500 rpm. The continuous phase was separated from the discontinuous phase by decantation. The decanted solution was stirred with 2 mL of 50% reagent according to table 1 per 100 g of solution for 1 h at 80°C, neutralized with 2 g Ca(OH)₂ and dried with 2 g anhydrous NaSO₄. This solution was centrifuged again at 40°C for 15 min at 4500 rpm. The solution was separated from the solid phase by decantation. The supernatant solution was completely concentrated using a rotary evaporator. The lead content was determined by ICP-AOES.

For the determination of the lead content the samples were decomposed under pressure using the microwave pressure decomposition device Speedwave Xpert (Berghof) following manufacturer's instructions. The sample in weight is approximately 0.1 g, the reagent is 10 mL of nitric acid (65 % in water). The resulting solution is diluted with bi-distilled water to give 100 mL total volume. To 10 mL of this solution, 100 µL of Yb standard solution (1000 mg/L) are added as internal standard. The determination of the metal content is carried out using an Optima 8300 DV (Perkin Elmer) according to manufacturer's instructions.

**Table 1**

| **Sample** | **Treatment** | **Pb content** |
|---|---|---|
| SM A* | none | 1.30 % |
| SM A-1 | only centrifuged | 920 ppm |
| SM A-2 | acetic acid** | 130 ppm |
| SM A-3 | nitric acid*** | < 100 ppm |

| | | |
|---|---|---|
| * Starting material A (SM A): ground PVC window profile, lead based stabilised ** Concentration: 50 %, aqueous *** Concentration: 25 %, aqueous | | |

### Example 2 - reduction of diverse metal contents of two starting materials

250 g Starting material A or B was dissolved in 3 L of methyl ethyl ketone at 80°C, the resulting composition was then centrifuged at 40°C for 15 min at 4500 rpm. The continuous phase was separated from the discontinuous phase by decantation. The decanted solution was stirred with 2 mL reagent according to table 2 per 100 g of solution for 1 h at 80°C, neutralized with 2 g Ca(OH)₂ and dried with 2 g anhydrous NaSO₄. This solution was centrifuged again at 40°C for 15 min at 4500 rpm. The solution was separated from the solid phase by decantation. The supernatant solution was completely concentrated using a rotary evaporator. The metal contents were determined by ICP-AOES as described in example 1. For determining the Ti content the decomposition is carried out with additional 3 mL of tetrafluoroboric acid (50 % aqueous).

**Table 2**

| **Sample** | **Treatment** | **Ba content** | **Ca content** | **Cd content** | **Pb content** | **Ti content** |
|---|---|---|---|---|---|---|
| SM A* | none | 405 ppm | 3.90 % | 291 ppm | 1.30% | 1.30% |
| SM A-1 | only centrifuged | 26 ppm | 963 ppm | 85 ppm | 920 ppm | 554 ppm |
| SM A-2 | acetic acid** | <20 ppm | 776 ppm | <20 ppm | 130 ppm | 302 ppm |
| SM A-3 | nitric acid*** | <20 ppm | 1.10 % | <20 ppm | <100 ppm | 182 ppm |
| SM B**** | - | 260 ppm | 2.30% | 277 ppm | 1.50% | 1.90% |
| SM B-1 | only centrifuged | 97 ppm | 0.22% | 113 ppm | 0.30% | 0.30% |
| SM B-2 | acetic acid** | <20 ppm | 589 ppm | <20 ppm | <117 ppm | 148 ppm |

| | | | | | | |
|---|---|---|---|---|---|---|
| * Starting material A (SM A): ground PVC window profile, lead based stabilised ** Concentration: 50 % aqueous *** Concentration: 25 %, aqueous **** Starting material B (SM B): ground PVC pipe, lead based stabilised | | | | | | |

### Example 3 - results of Congo red tests pure and with different additives

The thermal stability of the samples of virgin PVC and of the samples from example 2 was determined by means of a Congo red test (DIN VDE 0472 part 614 at 200°C). The Congo red test was performed with sheets of virgin S-PVC, and the materials from example 1 and example 2.

**Table 3**

| **Sample** | **Treatment** | **Congo red test [min]** |
|---|---|---|
| S-PVC, k value 67 | none | **3** |
| S-PVC, k value 66 | none | **3** |
| SM A | none | **24** |
| SM A-1 | only centrifuged | **4** |
| SM A-2 | Acetic acid | **3** |
| SM A-3 | Nitric acid | **3** |
| SM B | none | **28** |
| SM B-1 | only centrifuged | **11** |
| SM B-2 | Acetic acid | **4** |

To 100 g of SM A-2 solution, with 10 % PVC content, 0.5 phr of additive (SM A-4 to SM A-11), 1.3 phr (SM A-12), or 1.5 phr (SM A-13) of additive compound are added according to table 4. The mixtures were mixed intensively, and the solvent was evaporated. A Congo red test as detailed above was carried out with the materials thus obtained.

**Table 4**

| **Sample** | **Congo red test [min]** | **additive** |
|---|---|---|
| SM A-4 | **8** | Zinc stearate |
| SM A-5 | **10** | THEIC |
| SM A-6 | **11** | 1,3-Dimethyl-4-aminouracil |
| SM A-7 | **11** | Calcium acetylacetonate |
| SM A-8 | **11** | Zeolite 4A |
| SM A-9 | **10** | Hydrotalcite type 4 |
| SM A-10 | **10** | Ca(OH)₂ |
| SM A-11 | **13** | Mg(OH)₂ |
| SM A-12 | **13** | Ca Zn stabiliser OnePack 1* |
| SM A-13 | **14** | Ca Zn stabiliser OnePack 2** |

| | | |
|---|---|---|
| * Ca Zn stabiliser OnePack 1 (weight %): 10 % zinc containing hydrotalcite, 27 % Mg(OH)₂, 17 % THEIC, 7 % Antioxidant Irganox^{®} 1076 (octadecyl 3,5-di-tert-butyl-4-hydroxyhydrocinnamate), 14 % calcium stearate, 25 % zinc stearate. ** Ca Zn stabiliser OnePack 2 (weight %): 9 % zinc containing hydrotalcite, 23 % Mg(OH)₂, 15 % THEIC, 6 % Antioxidant Irganox^{®} 1076 (octadecyl 3,5-di-tert-butyl-4-hydroxyhydrocinnamate), 12 % calcium stearate, 22 % zinc stearate, 13 % calcium acetylacetonate. | | |

### Example 4 - application test results of restabilised material against fresh PVC

Composition R1 is a conventional dry-blend comprising the components as detailed in table 5. SM A-14 is prepared as detailed in Example 3, starting with SM A-2 solution and adding the same phr of impact modifier, chalk, titanium dioxide and Ca Zn stabilizer OnePack 3 as in R1 for the virgin S-PVC.

**Table 5**

| | **R1** | **R2** |
|---|---|---|
| S-PVC, k value 68 | 100,000 | |
| Impact modifier* | 5,500 | |
| Chalk | 10,000 | |
| Titanium dioxide | 3,500 | |
| Ca Zn stabiliser OnePack 3** | 3,450 | |
| SM A-14 | | 122,450 |
| | | |
| **Congo red test [min]** | **21** | **21** |

| | | |
|---|---|---|
| * Commercially available acrylic Impact modifier: Kane ACE EST 7 D ** Ca Zn stabiliser OnePack 3: Baeropan R 92327 FP (commercially available) | | |

Both compositions are processed on a two-roll mill at 190°C. Samples are taken every 3 min. Congo red test is performed on the first samples, i.e., after 3 min.

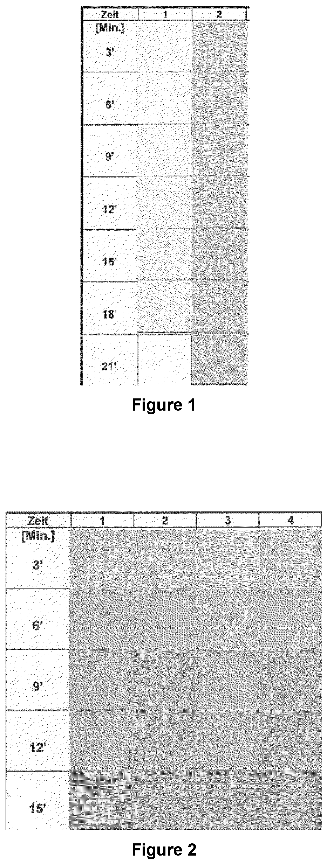

The result of the two-roll milling at 190°C after 3, 6, 9, 12, 15, 18 and 21 minutes is shown in Figure 1.

### Example 5 - application test results of halogenated polymer product

A conventional dry-blend is prepared with PVC, chalk and Ca Zn stabiliser OnePack 4 according to the amounts (phr) given in table, Sm B-2 is added according to table to the finished dryblend.

**Table 6**

| | **1** | **2** | **3** | **4** |
|---|---|---|---|---|
| S-PVC, k value 68 | 100 | 80 | 80 | 50 |
| SM B-2 | - | 20 | 20 | 50 |
| Chalk | 10 | 10 | 8 | 10 |
| Ca Zn stabiliser OnePack 4** | 1,668 | 1,668 | 1,334 | 1,668 |
| | | | | |
| Stabilizer content [%] | 100 | 100 | 80 | 100 |
| Recyclate content [%] | 0 | 20 | 20 | 50 |
| | | | | |
| **Congo red [min]** | **14** | **15** | **13** | **14** |

| | | | | |
|---|---|---|---|---|
| * Ca Zn stabiliser OnePack 4 (weight %): 40 % zinc stearate, 13 % calcium stearate, 36 % zeolite 4A, 7 % pentaerythritol, 4 % calcium acetylacetonate. | | | | |

Both compositions are processed on a two-roll mill at 190°C. Samples are taken every 3 min. Congo red test is performed on the first samples, i.e., after 3 min.

The result of the two-roll milling at 190°C after 3, 6, 9, 12, and 15 minutes is shown in Figure 1.

## Claims

1. A process for treating halogenated polymers comprising
(a) mixing a ground halogenated polymer starting material with a solvent to provide a composition comprising a continuous phase and a discontinuous phase,
wherein the halogenated polymer starting material comprises a halogenated polymer, and one or more further components;
wherein the continuous phase comprises at least part of the halogenated polymer and at least part of the solvent, and wherein the continuous phase is a solution; and
wherein the discontinuous phase comprises at least part of the one or more further components;
(b) separating the continuous phase and the discontinuous phase;
(c) adding additives to the continuous phase after separation from the discontinuous phase; and
(d) evaporating the solvent from the continuous phase to provide a halogenated polymer product.

2. The process of claim 1, wherein at least one further component comprises a heavy metal, preferably wherein the heavy metal is selected from the group comprising lead, cadmium, barium or tin or a mixture of two or more thereof.

3. The process of any one of the preceding claims, wherein the solvent in the continuous phase comprises less than 8 wt.-% of water, based on the total weight of the continuous phase.

4. The process of any one of the preceding claims, wherein the process is carried out in the absence of water.

5. The process of any one of the preceding claims, wherein the halogenated polymer is selected from the list consisting of polymers of vinyl chloride, copolymers comprising vinyl chloride units, polymers of vinylidene chloride, and post-chlorinated polymers and copolymers of vinyl chloride, preferably PVC and CPVC.

6. The process of any one of the preceding claims, wherein the halogenated polymer starting material comprises 0.01 wt.-% to 5 wt.-% of heavy metals and heavy metal containing components, based on the total weight of the halogenated polymer.

7. The process of any one of the preceding claims, wherein the ground halogenated polymer starting material has a particle size of from 0.5 mm to 5 cm.

8. The process of any one of the preceding claims, wherein the solvent is a solvent which can dissolve at least 10 g of halogenated polymer per liter of solvent, preferably a solvent selected from the group consisting of dioxane, acetone, ethyl acetate, halogenated organic solvents, methylethylketone, methylpropylketone, methylisopropylketone methylbutylketone, methylisobutylketone, tetrahydrofurane and a combination of two or more thereof.

9. The process of any one of the preceding claims, wherein the mixing ratio is in the range of from 10 to 300 g of the ground halogenated polymer starting material per 1 L solvent, preferably from 50 to 300 g of the ground halogenated polymer starting material per 1 L solvent.

10. The process of any one of the preceding claims, wherein at least 90 wt.-% of the halogenated polymer are comprised in the continuous phase, based on the total amount of halogenated polymer in the halogenated polymer starting material, preferably at least 99 wt.-%, more preferably at least 99.9 wt.-%.

11. The process of any one of the preceding claims, wherein the continuous phase and the discontinuous phase are separated by filtration, centrifugation, sedimentation, decantation or combinations of two or more thereof.

12. The process of any one of the preceding claims, wherein discontinuous phase comprises at least one of inorganic materials, and heavy metal compounds which are insoluble in the solvent, preferably tribasic lead sulfate, tetrabasic lead sulfate, dibasic lead phosphite, and dibasic lead phthalate.

13. The process of any one of the preceding claims, further comprising treating the continuous phase after separation from the discontinuous phase to reduce the content of the at least one further component in the continuous phase, preferably to reduce the heavy metal content in the continuous phase, and precipitation of at least part of the at least one further component.

14. The process of claim 13, wherein the heavy metal content of the continuous phase is reduced by at least 60 wt.-%, based on the heavy metal content of the continuous phase before the further treating step, preferably by at least 70 wt.-%, more preferably by at least 80 wt.-% or at least 90 wt.-%.

15. The process of any one of claims 12 to 13, wherein the heavy metal content of the continuous phase is reduced to less than 0.1 wt.-% preferably less than 0.05 wt.-% or even less than 0.02 wt.-% based on the total amount of the halogenated polymer in the continuous phase.

16. The process of any one of the preceding claims, wherein the additives are selected from the group consisting of fatty acid salts, hydrotalcites, metal oxides, metal hydroxides, polyols, 1,3-dicarbonyl compounds, lubricants, antioxidants, plasticizers, epoxy compounds, metal perchlorates, blowing agents, pigments, fillers, UV absorbers, light stabilizers, impact modifiers, processing aids, antistatics, biocides, metal deactivators, optical brighteners, flame retardants, antifogging agents, and combinations of two or more thereof.

17. The process of any one of the preceding claims, wherein the halogenated polymer product has a heavy metal content of less than 0.1 wt.-% preferably less than 0.05 wt.-% or even less than 0.02 wt.-%, based on the total amount of the halogenated polymer.

18. The process of any one of the preceding claims comprising re-using the evaporated solvent.

19. A process for making a polymer article comprising
i. providing a halogenated polymer product obtained by a method according to any one of the preceding claims; and
ii. processing the halogenated polymer product to obtain a polymer article, wherein the halogenated polymer product is processed by
a) mixing it with virgin halogenated polymer and one or more stabilizing components;
b) adding stabilizing components; or
c) adding the halogenated polymer product to a mixture of virgin halogenated polymer and optionally one or more stabilizing components during an extrusion process.
